# EUROPEAN PATENT SPECIFICATION

(11) **EP 1 041 047 B1**
(45) Date of publication and mention of the grant of the patent: **15.10.2003**
(21) Application number: 00201053.6
(22) Date of filing: 22.03.2000
(51) Int. Cl.: C03B 23/11

(54) **Assembly for automatic loading of glass tubes into thermoforming machines**
Vorrichtung zum automatischen Laden von Glasrohren in thermischen Formmaschinen
Appareil de chargement automatique de tubes en verre dans des machines de formation thermique

(30) Priority: 30.03.1999 IT MI990655
(43) Date of publication of application: 04.10.2000
(73) Proprietor: Euromatic s.r.l., 24047 Treviglio (IT)
(72) Inventor: Vaporesi, Donino, 24047 Treviglio (Bergamo) (IT)
(74) Representative: De Gregori, Antonella

(56) References cited:
- EP-A- 0 090 764
- DE-C- 3 439 747
- US-A- 4 446 960

## Description

The subject of the present invention is an assembly for automatic loading of glass tubes into thermoforming machines.

As is known, thermoforming machines operate on glass tubes of very large length, to obtain vials or tini bottles for medical or clinical use.

The glass tubes that are to be thermoformed are fed, vertically, into the thermoforming machine.

For this purpose, a loading assembly is known that comprises, first of all, a tank insider of which the tubes are put manually in a horizontal position, one on top of the other.

Next, by means of appropriate mechanical members the loading assembly conveys the glass tubes one by one.

The said mechanical members are equipped with systems which lift up and rotate the tubes until they are brought from the horizontal position into the vertical position to feed them, finally, into the thermoforming machine.

However, although the devices of the type described above automate the step of transferring the glass tubes to the thermoforming machine, they present certain drawbacks.

In the first place, the weight of the glass tubes themselves and the movement for conveying and feeding each individual tube into the feed tank cause rubbing between the tubes themselves, and hence deterioration of the surface of the glass, a phenomenon which jeopardizes the quality of the finished product.

In addition, given the great length of the tubes, which are generally 1.5 metres long, when the tubes are in the horizontal position, there is considerable encumbrance.

The purpose of the present invention is thus to make an assembly for automatic loading of glass tubes into thermoforming machines that is able to manipulate the glass tubes without damaging them in any way, avoiding rubbing, abrasions and possible breaking of the tubes.

Another purpose of the invention is to make an assembly for loading glass tubes into thermoforming machines that handles the glass tubes keeping them in a substantially vertical position or in a position slightly inclined with respect to the vertical, and all this in a simple and reliable way.

These and other purposes are achieved by an assembly for automatic loading of glass tubes into thermoforming machines, according to Claim 1.

Advantageously, the present invention enables the glass tubes to be manipulated in a basically vertical position.

This is obtained by conveying the containers of the glass tubes in a substantially vertical position, or rather in a position that is slightly inclined with respect to the vertical.

This position is the one most suited to prevent rubbing and abrasion of the surface of the glass.

A second important advantage of the present invention is that the conformation of the tank and of the conveying apparatus makes it possible to obtain reduced overall dimensions of the surface occupied by the latter, with consequent saving in costs associated to the said overall dimensions.

Further purposes and advantages of the present invention will emerge clearly from the ensuing description and from the annexed drawings, which are given purely to provide an explanatory and non-limiting example and in which:
- Figure 1 presents a side elevation view of an apparatus for conveying containers of glass tubes which belongs to the automatic loading assembly of the invention;
- Figure 2 presents a side elevation view of the automatic loading assembly, according to the present invention, in which also a manipulator of glass tubes and a portion of a thermoforming machine are represented;

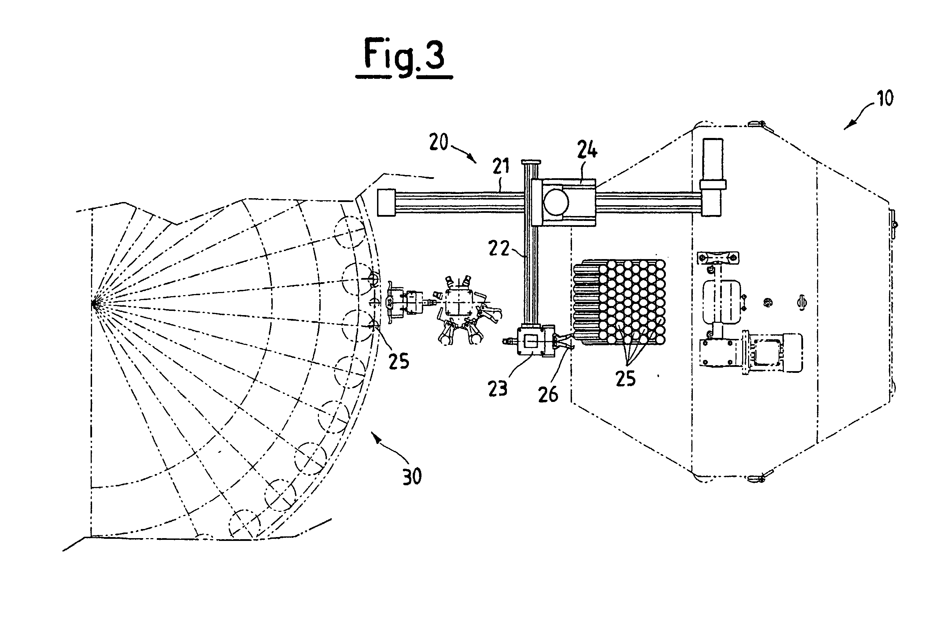

- Figure 3 is a top view of the automatic assembly for loading glass tubes according to the invention and of a portion of a thermoforming machine;
- Figure 4 is a plan view of the apparatus for conveying the containers shown in Figure 1; and
- Figure 5 represents a detail of the gripper of the manipulator belonging to the loading assembly.

With particular reference to the above figures, the assembly for automatic loading of glass tubes into thermoforming machines, according to the present invention, comprises an apparatus for conveying glass tubes, designated as a whole by the reference number 10.

The automatic loading assembly also comprises a manipulator for glass tubes set downstream of the conveying apparatus 10 and designated as a whole by the reference number 20.

The conveying apparatus 10 is provided with a plurality of seats 16, 36 for housing, in each one of them, in a position slightly inclined with respect to the vertical, a polygonal container 13, 12 containing the glass tubes 25 that are to be conveyed. This set of elements is in turn supported by the support 50.

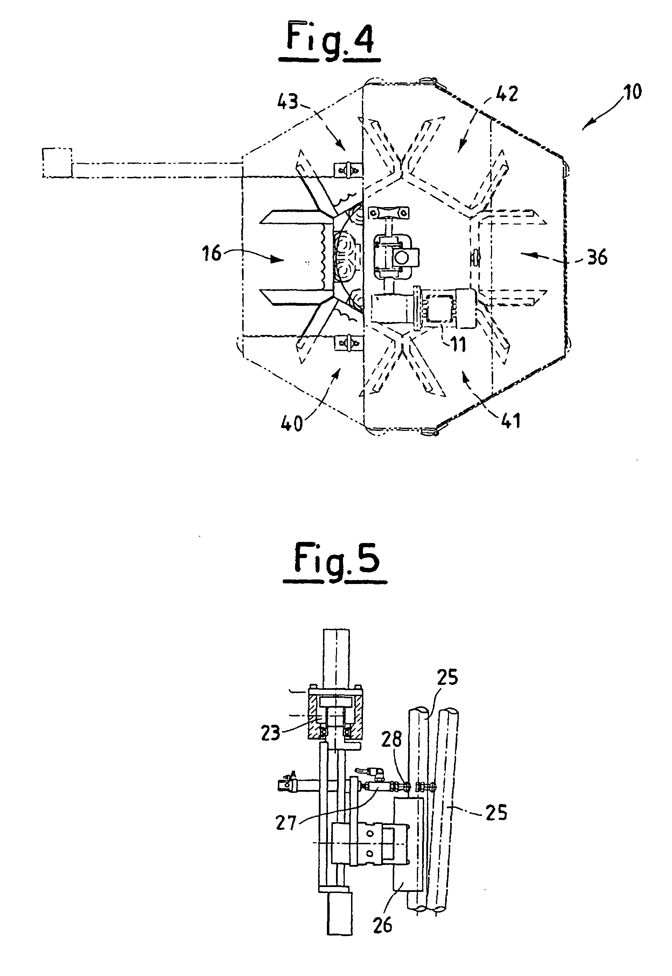

According to a particularly preferred embodiment of the invention, which is shown in Figure 4, the apparatus 10 for conveying the containers 12, 13 of glass tubes 25 has six seats 16, 36, 40, 41, 42, and 43 for housing the containers of glass tubes 25.

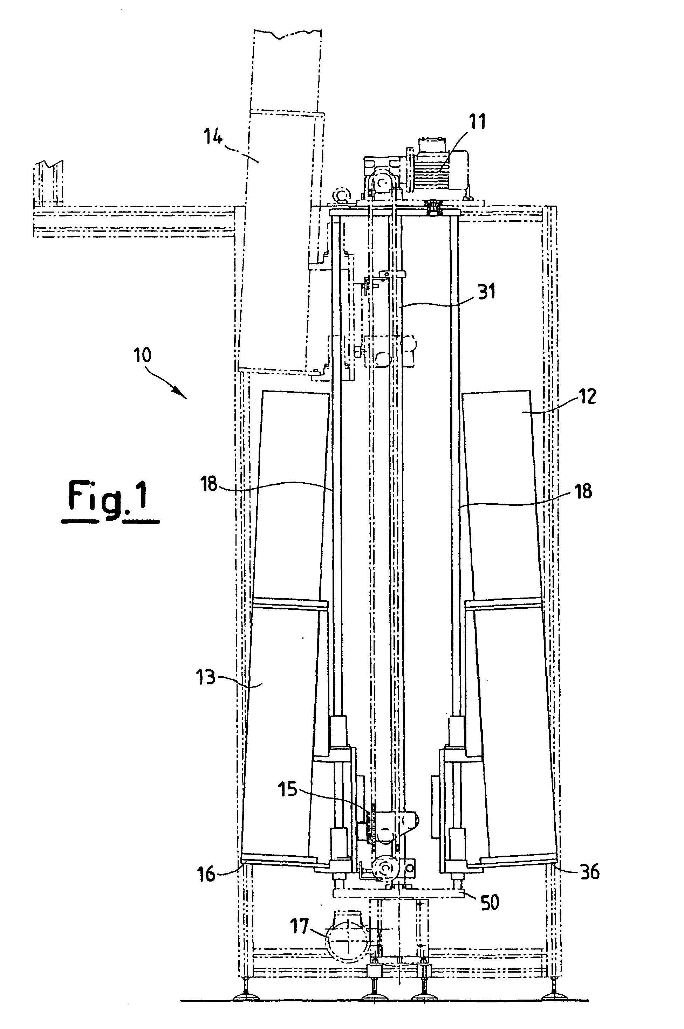

By means of the action of a motor-reducer assembly 17, the conveying apparatus 10 can rotate about a substantially vertical axis around the column 31 in order to pick up new containers, designated in Figure 1 with the reference number 12, these containers being full of glass tubes 25, and to convey them to the manipulator 20.

As mentioned previously, the containers 12, 13 are slightly inclined with respect to the vertical and are open on one side to enable the glass tubes 25 to be picked up by the manipulator 20.

The manipulator 20 has a first axis and a second axis, indicated, respectively, with the reference numbers 21 and 22, which are substantially perpendicular to one another, and is equipped with a vertical gripper 26 that is able to translate along the axes 21 and 22 by means of the action of the elements 23 and 24.

The vertical gripper 26 of the manipulator 20 is moreover able to rotate in a horizontal plane, by means of the element 23 to bring the individual glass tubes 25 to a thermoforming machine 30.

In addition, as illustrated more clearly in Figure 5, the manipulator 20 has a suction pad 28 which is provided with an actuator 27 and is able to pick up the individual tube 25 to bring it into the vertical position starting from the position that is slightly inclined with respect to the vertical, so that the tube may be gripped by the vertical gripper 26 of the manipulator 20.

According to a particularly preferred embodiment of the invention, the apparatus 10 for conveying the containers 13, 12 of glass tubes 25 is housed inside a pit.

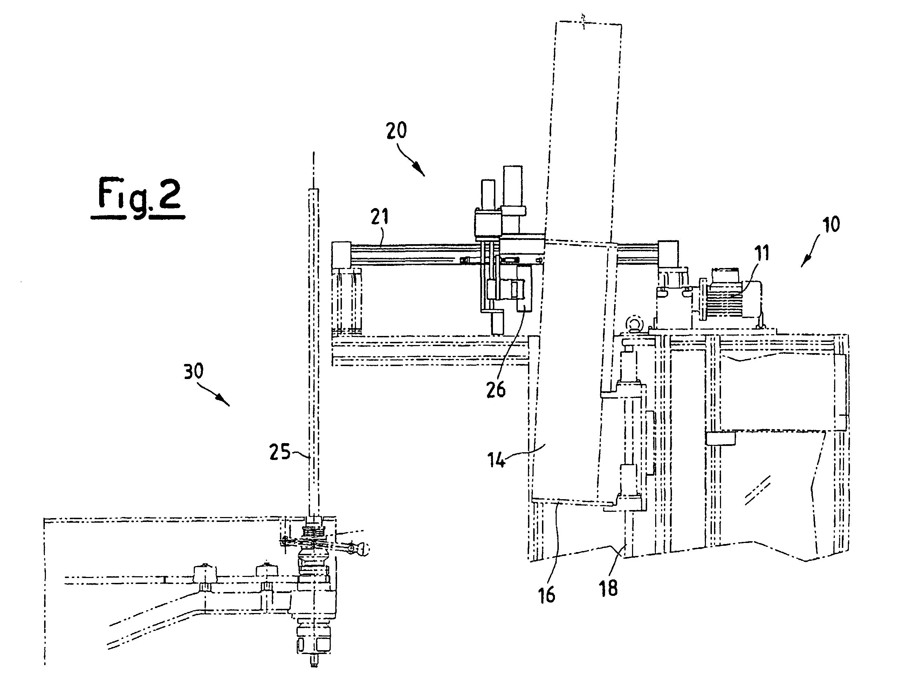

From this position, by means of a motor 11 and a gearing chain 15, the container 13 is raised, sliding along a guide 18, and moves into the position 14 indicated by dashed lines in Figure 1 and in Figure 2, so as to bring the tubes 25 up to the manipulator 20.

The operation of the assembly for automatic loading of glass tubes is described in what follows.

The glass tubes 25 are inserted into the corresponding container 12 and assume a slightly inclined position due to the slightly inclined position of the container 12 itself.

The container 12 is inserted in the seat 36 of the conveying apparatus, which, by the action of the motor-reducer assembly 17, rotates about the column 31 both to pick up new containers 12 full of tubes 25 and to convey the containers 12 which have previously been picked up and which are full of glass tubes 25 and carry them to the subsequent machine, i.e., the manipulator 20.

In Figure 1, the container of glass tubes 25, which is ready to be lifted up and taken to the manipulator 20, is designated by the reference number 13 and is inserted in the seat 16.

Since the apparatus 10 for conveying the containers 13, 12 of glass tubes 25 is housed inside a pit, the container 13 must be lifted up, so moving into the position 14, represented by dashed lines in Figures 1 and 2, by means of a motor 11 and a gearing chain 15 which enable sliding of the container 13 on guides 18, in order to bring the tubes 25 up to the manipulator 20.

Using the vertical gripper 26, the manipulator 20 grips the glass tubes 25 one at a time and takes them, by translating along the axes 21 and 22 and by means of the action of the elements 23 and 24, as well as by rotating in the horizontal plane, to the thermoforming machine 30.

In order to facilitate gripping of the vertical gripper 26 of the manipulator 20, the actuator 27 operates the suction pad 28, which engages the glass tube 25 to bring it into the vertical position, and hence into the ideal position for it to be gripped by the vertical gripper 26.

When the container 13 has been completely emptied out, it is lowered, and the conveying apparatus 10 rotates through an appropriate angle and lifts up the next container.

From the above description there emerge clearly the characteristics of the assembly for automatic loading of glass tubes into thermoforming machines, which is the subject of the present invention, as also clearly emerge the advantages afforded thereby.

In particular, these advantages are represented, in the first place, by the fact that the present invention enables the containers 12, 13 of the glass tubes 25 to be conveyed in a substantially vertical position, which is slightly inclined with respect to the vertical.

This position is the most suited to avoid rubbing and abrasion of the surface of the glass.

A second important advantage of the present invention lies in the fact that the conformation of the conveying apparatus 10 makes it possible to obtain a reduction in the overall surface dimensions of the system.

Finally, it is clear that numerous variations may be made to the automatic assembly for loading glass tubes into thermoforming machines which is the subject of the present invention, without thereby departing from the scope of the claims.

## Claims

1. Assembly for the automatic loading of glass tubes into thermoforming machines, comprising an apparatus (10) for conveying the glass tubes (25) and a manipulator (20) of the glass tubes (25), **characterized in that** the said conveying apparatus (10) is provided with at least two seats (16, 36) for housing, in each of them, a container (12, 13) for the said glass tubes (25) and also with means for rotating the conveying apparatus about a substantially vertical axis, so as to bring the said containers (12, 13) full of glass tubes (25) to the said manipulator (20), and **in that** the said containers (12, 13) are housed in their own seats (16, 36) in a position slightly inclined with respect to the vertical and are open on one side to enable the said manipulator (20) to pick up the said glass tubes (25).

2. Assembly for automatic loading of glass tubes according to Claim 1, **characterized in that** the said apparatus (10) for conveying the containers (12, 13) of glass tubes (25) presents six seats (16, 36, 40, 41, 42, 43) for housing the said containers (12, 13).

3. Assembly for automatic loading of glass tubes according to Claim 1 or Claim 2, **characterized in that** the means for rotating the conveying apparatus (10) about a substantially vertical axis comprise a motor-reducer assembly (17).

4. Assembly for automatic loading of glass tubes according to Claim 3, **characterized in that** the said apparatus (10) for conveying containers (12, 13) of glass tubes (25) is housed in a pit and presents means for lifting up the containers (12, 13) so as to bring the glass tubes (25) up to the said manipulator (20).

5. Assembly for automatic loading of glass tubes according to Claim 4, **characterized in that** the means for lifting up the said containers (12, 13) comprise a motor (11) and a gearing chain (15), as well as at least one guide (18) for each one of the said containers (12, 13).

6. Assembly for automatic loading of glass tubes according to Claim 1, **characterized in that** the said manipulator (20) has one first axis (21) and one second axis (22) which are substantially perpendicular to one another, and a vertical gripper (26) which is able to translate along the said axes (21, 22), by means of the elements (23) and (24), respectively, and to rotate in a horizontal plane.

7. Assembly for automatic loading of glass tubes according to Claim 6, **characterized in that** the said manipulator (20) has a suction pad (28) provided with an actuator (27), whereby the said suction pad (28) is able to pick up the individual glass tube (25) to bring it, from a position that is slightly inclined with respect to the vertical, into a vertical position in such a way that it can be easily gripped by the said vertical gripper (26).

## Patentansprüche

1. Anordnung für das automatische Laden von Glasrohren in Thermoform-Maschinen mit einer Vorrichtung (10) zum Befördern der Glasrohre (25) und einem Manipulator (20) der Glasrohre (25), **dadurch gekennzeichnet, dass** die Fördervorrichtung (10) mit mindestens zwei Aufnahmen (16, 36), um in jeder von diesen einen Behälter (12, 13) für die Glasrohre (25) aufzunehmen, sowie mit Mitteln zum Drehen der Fördervorrichtung um eine im Wesentlichen vertikale Achse versehen ist, um die mit Glasrohren (25) gefüllten Behälter (12, 13) zu dem Manipulator (20) zu bringen, und dass die Behälter (12, 13) in ihren eigenen Aufnahmen (16, 36) in einer Position untergebracht sind, die in Bezug auf die Vertikale geringfügig geneigt ist, und zu einer Seite hin offen sind, um es zu ermöglichen, dass der Manipulator (20) die Glasrohre (25) aufnehmen kann.

2. Anordnung zum automatischen Laden von Glasrohren nach Anspruch 1, **dadurch gekennzeichnet, dass** die Vorrichtung (10) zum Befördern der Behälter (12, 13) mit Glasrohren (25) sechs Aufnahmen (16, 36, 40, 41, 42, 43) zur Unterbringung der Behälter (12, 13) aufweist.

3. Anordnung zum automatischen Laden von Glasrohren nach Anspruch 1 oder Anspruch 2, **dadurch gekennzeichnet, dass** die Mittel zum Drehen der Fördervorrichtung (10) um eine im Wesentlichen vertikale Achse eine Motor-Reduzierer-Anordnung (17) umfassen.

4. Anordnung zum automatischen Laden von Glasrohren nach Anspruch 3, **dadurch gekennzeichnet, dass** die Vorrichtung (10) zum Befördern von Behältern (12, 13) mit Glasrohren (25) in einer Vertiefung untergebracht ist und Mittel zum Anheben der Behälter (12, 13) aufweist, um die Glasrohre (25) nach oben bis zu dem Manipulator (20) zu bringen.

5. Anordnung zum automatischen Laden von Glasrohren nach Anspruch 4, **dadurch gekennzeichnet, dass** die Mittel zum Anheben der Behälter (12, 13) einen Motor (11) und eine Getriebekette (15) sowie mindestens eine Führung (18) für jeden der Behälter (12, 13) umfassen.

6. Anordnung zum automatischen Laden von Glasrohren nach Anspruch 1, **dadurch gekennzeichnet, dass** der Manipulator (20) eine erste Achse (21) und eine zweite Achse (22), die im Wesentlichen senkrecht zueinander stehen, sowie einen vertikalen Greifer (26) aufweist, der in der Lage ist, eine Translation entlang der Achsen (21, 22) mittels der Elemente (23 bzw. 24) auszuführen und in einer horizontalen Ebene zu rotieren.

7. Anordnung zum automatischen Laden von Glasrohren nach Anspruch 6, **dadurch gekennzeichnet, dass** der Manipulator (20) einen Saugnapf (28) aufweist, der mit einem Aktuator (27) versehen ist, wobei der Saugnapf (28) in der Lage ist, das einzelne Glasrohr (25) aufzunehmen, um es aus einer Position, die in Bezug auf die Vertikale geringfügig geneigt ist, in eine vertikale Position zu bringen, und zwar auf eine solche Weise, dass es leicht von dem vertikalen Greifer (26) gegriffen werden kann.

## Revendications

1. Assemblage de chargement automatique de tubes en verre dans des machines de formation thermique comprenant un appareil (10) pour le transport des tubes en verre (25) et un manipulateur (20) des tubes en verre (25), **caractérisé par le fait que** ledit appareil de transport (10) est muni d'au moins deux sièges (16, 36) pour recevoir, dans chacun d'eux, un récipient (12, 13) pour lesdits tubes en verre (25) et également d'un moyen permettant de faire tourner l'appareil de transport autour d'un axe sensiblement vertical de manière à amener lesdits récipients (12, 13) chargés de tubes en verre (25) audit manipulateur (20) et **par le fait que** lesdits récipients (12, 13) sont logés dans leur propre siège (16, 36) dans une position légèrement inclinée par rapport à la verticale et sont ouverts d'un côté pour permettre audit manipulateur (20) de saisir lesdits tubes en verre (25).

2. Assemblage de chargement automatique de tubes en verre selon la revendication 1, **caractérisé par le fait que** ledit appareil (10) de transport des récipients (12, 13) pour tubes en verre (25) présente six sièges (16, 36, 40, 41, 42, 43) pour recevoir lesdits récipients (12, 13).

3. Assemblage de chargement automatique de tubes en verre selon la revendication 1 ou la revendication 2, **caractérisé par le fait que** le moyen de mise en rotation de l'appareil de transport (10) autour d'un axe sensiblement vertical comprend un ensemble moteur-réducteur (17).

4. Assemblage de chargement automatique de tubes en verre selon la revendication 3, **caractérisé par le fait que** ledit appareil (10) de transport de récipients (12, 13) pour tubes en verre (25) est logé dans un puits et présente un moyen de levage des récipients (12, 13) de manière à amener les tubes en verre (25) vers le haut jusqu'audit manipulateur (20).

5. Assemblage de chargement automatique de tubes en verre selon la revendication 4, **caractérisé par le fait que** le moyen de levage desdits récipients (12, 13) comprend un moteur (11) et une chaîne pour engrenages (15) ainsi qu'au moins un guide (18) pour chacun desdits récipients (12, 13).

6. Assemblage de chargement automatique de tubes en verre selon la revendication 1, **caractérisé par le fait que** ledit manipulateur (20) a un premier axe (21) et un second axe (22) qui sont sensiblement perpendiculaires l'un à l'autre, et un appareil de préhension (26) vertical qui est capable d'une translation le long desdits axes (21, 22) au moyen des éléments (23) et (24) respectivement et d'une rotation dans un plan horizontal.

7. Assemblage de chargement automatique de tubes en verre selon la revendication 6, **caractérisé par le fait que** ledit manipulateur (20) a un plateau-ventouse (28) muni d'un actionneur (27) au moyen de quoi ledit plateau-ventouse (28) est capable de saisir le tube en verre distinct (25) pour l'amener d'une position qui est légèrement inclinée par rapport à la verticale jusqu'à une posítion verticale de telle façon qu'il puisse être facilement saisi par ledit appareil vertical de préhension (26).
